# EUROPEAN PATENT APPLICATION

(11) **EP 3 138 938 A1**
(43) Date of publication of application: **08.03.2017**
(21) Application number: 16187049.8
(22) Date of filing: 02.09.2016
(51) Int. Cl.: C23C 2/02, C23C 2/06, C23C 2/24, C23C 2/38

(54) **METHOD FOR TREATING A STEEL TUBING WITH A COATING TO RESIST CORROSION**

(30) Priority: 04.09.2015 US 201562214353 P; 30.08.2016 US 201615251338
(71) Applicant: Cooper-Standard Automotive, Inc., Novi, MI 48375 (US)
(72) Inventor: KRAUSE, Randal, Dryden, MI 48028 (US); MANIER, Dennis, Auburn Hills, MI 48326 (US); SMITH, Christopher, Corning, OH 43730-9739 (US)
(74) Representative: Kordel, Mattias

(57) **Abstract**

Method of treating a steel tubing (12) with a coating to resist corrosion, the method including:
advancing the steel tubing (12) along a processing path;
heating the steel tubing (12) to a first temperature;
cleaning the steel tubing (12) heated to the first temperature with a hydrogen-nitrogen gas mixture;
cooling the cleaned steel tubing (12) to a second temperature;
reheating the cleaned steel tubing (12) to a third temperature; and
applying a layer of zinc-aluminum coating (102, 202) on the reheated steel tubing (12).

## Description

### FIELD

This application claims the benefit of United States Provisional Patent Application No. 62/214,353 filed 4 September 2015, which application is herein expressly incorporated by reference.

### FIELD

The present disclosure relates generally to a method and system for treating a steel tubing with a coating to resist corrosion.

### BACKGROUND

This section merely provides background information related to the present disclosure and may not constitute prior art.

Corrosion occurs to parts made from iron or an alloy that contains iron, like steel, from exposure to oxygen and moisture over a period of time. Various techniques are known in the art for treating such a part with a coating to resist corrosion. In one known technique, a part is passed through a bath of molten zinc-aluminum alloy. After passing through the bath, a nitrogen blow off system is utilized to remove excess zinc-aluminum alloy from the part.

While known techniques for coating part to resist corrosion have proven to be generally acceptable for their intended purpose, each known technique is associated with disadvantages. For example, the corrosion resistant coating applied to the part is often inconsistent. As a result, it is often necessary to require an increased nominal thickness of coating. Additionally, it is necessary to remediate waste zinc-aluminum alloy.

Accordingly, a continuous need for improvement exists in the relative art.

### SUMMARY

This section provides a general summary of the disclosure, and is not a comprehensive disclosure of its full scope or all of its features.

In accordance with one particular aspect, the present teachings provide a method of treating a part with a coating to resist corrosion. The method includes passing a steel tubing through a trough of molten zinc-aluminum alloy. The method additionally includes establishing a magnetic field with an electrical current and adjusting the electric current to adjust a thickness of the layer of zinc-aluminum coating on the steel tubing. The method further includes passing the steel tubing through the magnetic field.

In accordance with another particular aspect, the present teachings provide a method of treating a steel tubing with a coating to resist corrosion that includes advancing the steel tubing along a processing path. The method additionally includes heating the steel tubing to a first temperature and cleaning the steel tubing heated to the first temperature with a hydrogen-nitrogen gas mixture. The method further includes cooling the cleaned steel tubing to a second temperature, reheating the cleaned steel tubing to a third temperature and applying a layer of zinc-aluminum coating on the reheated steel tubing.

Further areas of applicability will become apparent from the description provided herein. The description and specific examples in this summary are intended for purposes of illustration only and are not intended to limit the scope of the present disclosure.

### DRAWINGS

The present teachings will become more fully understood from the detailed description, any appended claims and the following drawings. The drawings are for illustrative purposes only and are not intended to limit the scope of the present disclosure.
FIG. 1 is a schematic view illustrating a system for treating a part with a coating to resist corrosion in accordance with the present teachings.
FIG. 1A is a perspective view of a ceramic centering guide of the system of FIG. 1.
FIG. 1B is a cross-sectional view taken through the ceramic centering guide of FIG. 1A.
FIG. 2 is a perspective view of an exemplary tubing construction including a steel tubing coated in accordance with the present teachings.
FIG. 3 is a perspective view of another exemplary tubing construction including a steel tubing coated in accordance with the present teachings.
FIG. 4A is a cross-sectional view through a portion of a steel tubing coated in accordance with the present teachings.
FIG. 4B is a cross-sectional view similar to FIG. 4A illustrating a portion of a steel tubing coated in accordance with the prior art.

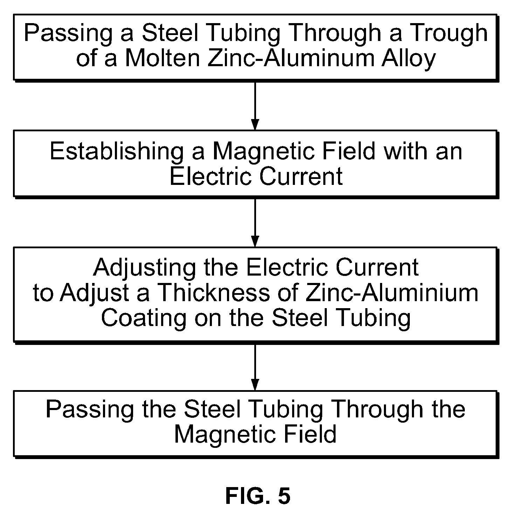

FIG. 5 illustrates the general steps of a method for treating a part with a coating to resist corrosion in accordance with the present teachings.

Corresponding reference numerals indicate corresponding parts throughout the several views of the drawings.

### DESCRIPTION OF VARIOUS ASPECTS

The following description is merely exemplary in nature and is not intended to limit the present disclosure, its application, or uses. It should be understood that throughout the drawings, corresponding reference numerals indicate like or corresponding parts and features.

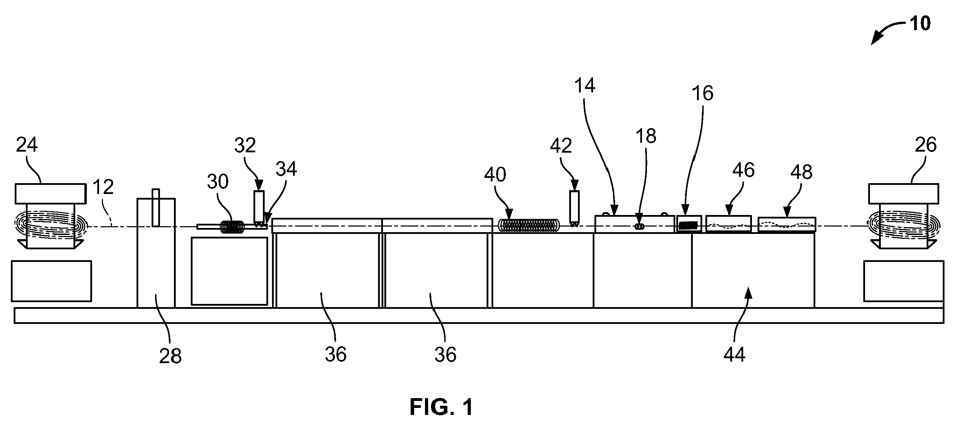

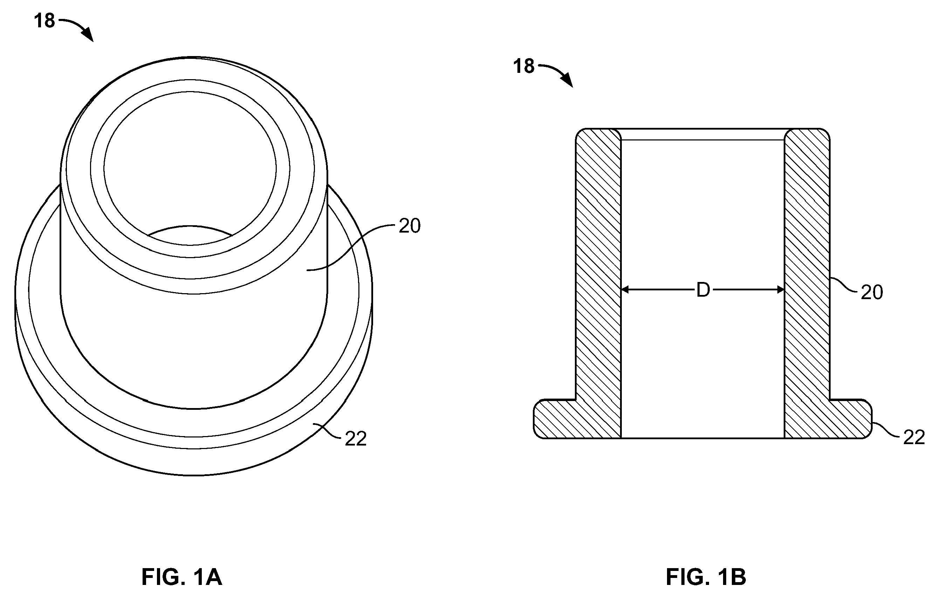

With initial reference to Figure 1 of the drawings, a system for treating a part with a coating to resist corrosion in accordance with the present teachings is schematically illustrated and generally identified at reference character 10. It will become apparent to those skilled in the art that the method and system described herein may be applied to a wide variety of iron or iron alloy constructed parts for purposes of coating the parts to resist corrosion. In one particular application, the system 10 is adapted to treat steel tubing 12. The steel tubing 12 may be used for automotive applications such as brake lines, fuel lines, transmission and oil cooler lines and the like. It will be appreciated, however, that the present teachings may be readily adapted for use in connection with the coating of other parts.

In the schematic view of Figure 1, the tubing 12 extends along a processing path from a first coiler 24 to a second coiler 26. From the first coiler, the tubing 12 moves to a coil join and weld station 28. In a conventional manner, the coil weld and join station joins one coil to a previous coil for continuous processing along the processing path.

The tubing 12 next progresses to a first induction heating coil 30 where the tubing 12 is heated to a first desired temperature. In certain applications, the first desired temperature is at least approximately 1300°F (approximately 700°C). The temperature of the tubing 12 is monitored by a first pyrometer 32. The first pyrometer 32 may conventionally control the first induction heating coil 30 to achieve the first desired temperature.

A gas injector 34 removes surface contaminants from the steel tubing 12 heated to the first desired temperature with a hydrogen-nitrogen gas mixture. In one application, the gas mixture is approximately 10-20% hydrogen and 80-90% nitrogen. The cleaned tubing 12 is then cooled to a second temperature. In the application illustrated, the cleaned tubing 12 may be cooled to the second temperature with one or more cooling baths 36. As illustrated, the one or more cooling baths may include a plurality of cooling baths 36. In one application, the cooling baths 36 cool the steel tubing 12 to a second temperature that is at least approximately 700°F (approximately 370°C) less than the first temperature. In this particular application, the second temperature is no more than approximately 600°F (approximately 315°C).

The steel tubing 12 is next reheated to a third temperature prior to alloy coating. In this manner, first cooling the steel tubing 12 and subsequently reheating the steel tubing 12), uniformity of the alloy coating is promoted. The heating of the steel tubing 12 to the third temperature may be done with a second induction heating coil 40. The second induction heating coil 40 may heat the tubing 12 to the third temperature for alloy coating. In certain applications, the third temperature is at least approximately 800°F (approximately 425°C) and preferably at least approximately 850°F (approximately 450°C). The temperature of the reheated steel tubing 12 may be monitored by a second pyrometer 42. The second pyrometer 42 may conventionally control the second induction heating coil 42.

The system 10 of the present teachings is illustrated to include a coating trough 14 and a magnetohydrodynamic (MHD) coil 16. The coating trough 14 contains a bath of molten zinc-aluminum alloy. The zinc-aluminum alloy may include approximately 95% zinc and 5% aluminum by weight. One suitable zinc-aluminum alloy is commercially available under the trademark GALFAN™ from Eastern Alloys, Inc. It will be understood that other zinc-aluminum alloys may be utilized within the scope of the present teachings. The zinc-aluminum alloy is preferably maintained at a temperature of at least approximately 800°F (approximately 425°C). More preferably, the zinc-aluminum alloy may be maintained within the coating trough 14 at a temperature of between approximately 820°F (approximately 440°C) and approximately 880°F (approximately 470°C). In one particular application, the zinc-aluminum alloy is maintained in the coating trough 14 at a temperature of approximately 850°F (approximately 450°C). The temperature of the molten zinc-aluminum alloy may be approximately equal to the reheated temperature or third temperature of the steel tubing 12 prior to entry into the coating trough 14.

One suitable MHD coil 16 is commercially available from SunWyre, Incorporated. It will be understood that other MHD coils may be used within the scope of the present teachings. The MHD coil 16 may be controlled to produce an electric field for electrically conducting the molten zinc-aluminum alloy.

A centering guide 18 may be used to ensure that the steel tubing is centered relative to the magnetic field as the steel tubing 12 passes through the coating trough 14. In one application, the centering guide may be a ceramic centering guide 18. Alternatively, the centering guide 18 may be constructed of alternative material having a sufficiently low coefficient of friction and having suitable strength and durability characteristics. The centering guide 18 may be disposed within the trough 14.

The centering guide 18 is shown in further detail in Figures 1A and 1B. As illustrated, the centering guide 18 may be unitarily constructed to include a tubular portion 20 and a radially extending flange 22. The radially extending flange 22 may be proximate an end of the centering guide 18 and may facilitate mounting of the centering guide 18 within the coating trough 14. The centering guide 18 defines an inner diameter D.

According to one particular step, the method of the present teachings may include passing the steel tubing 12 through the trough 14 of molten zinc-aluminum alloy. In one application, the trough 14 may be configured such that the steel tubing 12 horizontally passes through the molten zinc-aluminum. The steel tubing 12 passes through openings (not particularly shown) in both proximal and distal ends of the coating trough 14.

According to a further particular step, the method of the present teachings may include establishing a magnetic field with an electrical current. The strength of the magnetic field may be adjusted by adjusting the electrical current. In accordance with one example, the magnetic field created by the coil 16 may have a length parallel to the direction of travel of the steel tubing of approximately 12".

In another particular step, the method of the present teachings may include adjusting the electric current based for purposes of attaining a desired thickness of the coating of zinc-aluminum alloy on the steel tubing 12. In this regard, the strength of the magnetic field necessary to attain a predetermined coating thickness of the coating of zinc-aluminum alloy on the steel tubing 12 will also vary according to a duration of time that the steel tubing 12 is within the magnetic field. The duration of time is a function of the length of the magnetic field and the speed of the steel tubing 12 through the magnetic field. The magnetic field may be adjusted by adjusting the power and/or frequency of the electric current delivered to the magnetic coil 16. As the power is increased (e.g., the magnetic field is greater), the resulting thickness of the coating of the zinc-aluminum alloy decreases. Conversely, as the power is decreased (e.g., the magnetic field is lower), the thickness of the coating of the zinc-aluminum alloy increases.

In another particular step, the steel tubing 12 is passed through the magnetic field. The magnetic field serves to suspend the zinc-aluminum alloy as it passes there through. In this manner, a uniform coating of zinc-aluminum alloy may be deposited on the steel tubing 12. As noted above, the steel tubing 12 is centered relative to the magnetic field as it passes through the magnetic field.

A rate of speed of the steel tubing 12 through the magnetic field may be maintained within a predetermined tolerance to attain a uniform coating on the steel tubing 12. In one application, the speed of the steel tubing 12 along the processing path and through the magnetic field may be maintained within a tolerance of +- 0.5%. The speed of the steel tubing 12 through the magnetic field may be controlled in a conventional manner with a dancing system.

After the MHD coil 16, the steel tubing 12 progresses to a cooling station 44. In the embodiment illustrated, the cooling station 44 includes a hot water quench 46 and a cold water quench 48. The hot water quench 46 may cool the steel tubing 12 to a fourth temperature for setting the zinc-aluminum alloy coating and stopping sag. The fourth temperature may be approximately no more than approximately 200°F (approximately 93°C). In one particular application, the fourth temperature is approximately between 170°F (approximately 77°C) and 180°F (approximately 82°C). The tubing 12 may be exposed to the air between the hot water quench 46 and the cold water quench 48.

The cold water quench 48 may cool the tubing 12 to a fifth temperature. The fifth temperature may be approximately no more than approximately 100°F (approximately 38°C). In one particular application, the fifth temperature is approximately between 80°F (approximately 27°C) and 100°F (approximately 38°C). The fifth temperature may be approximately equal to an ambient temperature.

The steel tubing 12 may then be coiled and stored at the second coiler 26.

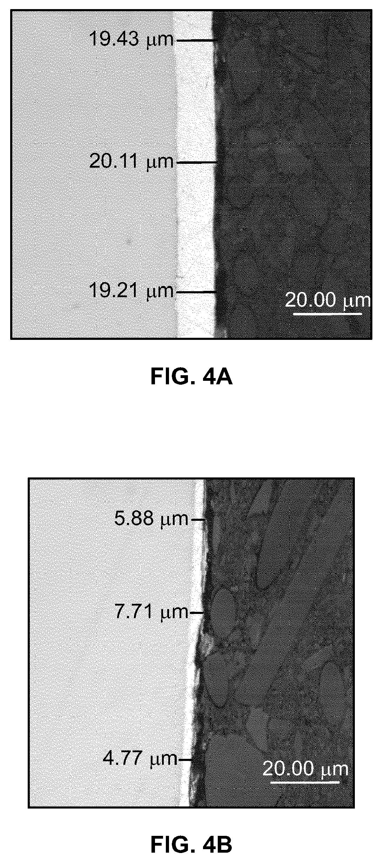

With reference to Figures 4A and 4B, a comparison is provided between a steel tubing 12 coated with the present teachings (Figure 4A) and a steel tubing coated in accordance with a nitrogen wipe process of the prior art. As illustrated, the present teachings provide for a more uniform coating.

In accordance with one particular application, the steel tubing 12 to be coated has an outside wall thickness of approximately 3/16"-3/4" and an inside wall thickness of approximately .028" - .038". Where the coating of zinc-aluminum alloy on the steel tubing 12 is desired to be approximately average 20-25 microns, the magnetic field may be maintained at approximately 60% by delivering a current of at least approximately 700 amps, and more preferably at least approximately 800 amps, to the coil and the speed of the steel tubing through the magnetic field may preferably be at least approximately 200 feet per minute (FPM) and more preferably be at least approximately 250 FPM with a tolerance of +- 0.5%. In this example, the magnetic field may have a length parallel to the direction of travel of the steel tubing of approximately 12".

### EXAMPLES

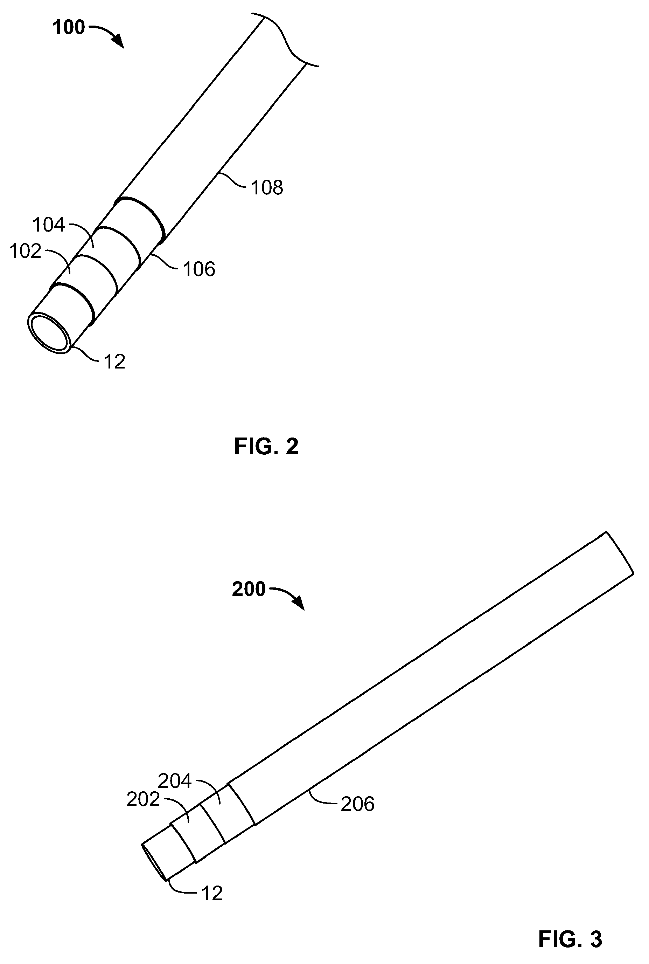

With reference to Figure 3, an exemplary tubing construction 100 including a steel tubing 12 coated in accordance with the present teachings is illustrated. The construction 100 shown is particularly adapted for lower temperature applications such as brake lines, fuel lines, severe corrosion areas and the like. In certain applications, the steel tubing 12 may be selected from a group consisting of SAE J526, SAE J527, Din 74-234, JASO M101 or the like. The construction 100 includes a zinc-aluminum coating 102 applied in accordance with the present teachings. The zinc-aluminum coating 102 may conform with ASTM B750-08. The zinc-aluminum coating 102 may be greater than approximately 10µm. The zinc-aluminum coating 102 may preferably be greater than approximately 15µm. In certain applications, the zinc-aluminum coating 102 may be between approximately 18µm and 22µm. In one particular application, the zinc-aluminum coating 102 may be approximately 20µm. The construction 100 may additionally include a zinc phosphate conversion coating 104 and a nylon primer 106. An outermost layer 108 of the construction 100 may be Nylon 6/12 or Type 12, or the like.

With reference to Figure 4, another exemplary tubing construction 200 including a steel tubing 12 coated in accordance with the present teachings is illustrated. The construction 200 shown is particularly adapted for higher temperature applications such as transmission and engine oil cooler lines. In certain applications, the steel tubing 12 may be selected from a group consisting of SAE J526, SAE J527, or the like. The construction 200 includes a zinc-aluminum coating 102 applied in accordance with the present teachings. The zinc-aluminum coating 102 may conform with ASTM B750-08. The zinc-aluminum coating 102 may be greater than approximately 10µm. The zinc-aluminum coating 102 may preferably be greater than approximately 15µm. In certain applications, the zinc-aluminum coating 102 may be between approximately 18µm and 22µm. In one particular application, the zinc-aluminum coating 102 may be at least approximately 20µm. In another particular application, the zinc-aluminum coating 102 may be at least approximately 25µm. The construction 200 may additionally include a zinc phosphate conversion coating 204. An outermost layer 206 of the construction 200 may be aluminum rich epoxy primer or the like.

Accordingly, it will be appreciated that the present teachings set forth a method for treating a steel part 12 with a coating that provides better corrosion resistance and reduced waste requiring remediation. Additionally, the present teachings provide a method and system 10 to more consistently apply a corrosion resistant coating to a steel tubing 12.

While specific examples have been discussed in the specification and illustrated in the drawings, it will be understood by those skilled in the art that various changes may be made and equivalence may be substituted for elements thereof without departing from the scope of the present teachings. Furthermore, the mixing and matching of features, elements and/or functions between various examples may be expressly contemplated herein so that one skilled in the art would appreciate from the present teachings that features, elements and/or functions of one example may be incorporated into another example as appropriate, unless discussed otherwise above. Moreover, many modifications may be made to adapt a particular situation or material to the present teachings without departing from the essential scope thereof. Therefore, it may be intended that the present teachings not be limited to the particular examples illustrated by the drawings and discussed in the specification as the best mode of presently contemplated for carrying out the present teachings but that the scope of the present disclosure will include any embodiments following within the foregoing description and any appended claims.

## Claims

1. Method of treating a steel tubing (12) with a coating to resist corrosion, the method including:
advancing the steel tubing (12) along a processing path;
heating the steel tubing (12) to a first temperature;
cleaning the steel tubing (12) heated to the first temperature with a hydrogen-nitrogen gas mixture;
cooling the cleaned steel tubing (12) to a second temperature;
reheating the cleaned steel tubing (12) to a third temperature; and
applying a layer of zinc-aluminum coating (102, 202) on the reheated steel tubing (12).

2. Method of treating a steel tubing with a coating to resist corrosion, preferably according to claim 1, **characterized in that** the method includes:
passing the steel tubing (12) through a trough (14) of molten zinc-aluminum alloy to coat the steel tubing (12) with the layer of zinc-aluminum alloy (102, 202);
establishing a magnetic field with an electrical current;
adjusting the electric current to adjust a thickness of the layer of zinc-aluminum coating (102, 202) on the steel tubing (12); and
passing the steel tubing through the magnetic field.

3. Method of treating a steel tubing with a coating to resist corrosion according to one of the preceding claims, **characterized in that** the layer of zinc-aluminum coating (102, 202) has an average thickness of approximately 20-25 microns and adjusting the electrical current includes adjusting the electrical current to at least approximately 700 amps, and preferably at least approximately 800 amps.

4. Method of treating a steel tubing with a coating to resist corrosion according to one of the preceding claims, wherein passing the steel tubing (12) through the magnetic field includes centering the steel tube (12) relative to the magnetic field.

5. Method of treating a steel tubing with a coating to resist corrosion according to claim 4, wherein the steel tubing (12) is centered relative to the magnetic field with a centering guide (18), preferably a ceramic centering guide (18).

6. Method of treating a steel tubing with a coating to resist corrosion of claim 5, wherein the centering guide (18) is disposed in the trough (14).

7. Method of treating a steel tubing with a coating to resist corrosion according to one of the preceding claims, **characterized in that** the method further comprises controlling a rate of speed of the steel tubing through the magnetic field to a predetermined tolerance of approximately of +- 0.5%.

8. Method of treating a steel tubing with a coating to resist corrosion according to one of the preceding claims, **characterized in that** the method further comprises advancing the steel tubing (12) along a processing path and through the magnetic field at a speed of at least approximately 200 FPM, and preferably at a speed of at least approximately 250 FPM.

9. Method of treating a steel tubing with a coating to resist corrosion according to one of the preceding claims, **characterized in that** adjusting the electric current to adjust a thickness of the layer of zinc-aluminum coating on the steel tubing (12) include:
decreasing the electric current to increase the thickness of the layer of zinc-aluminum coating (102, 202) on the steel tubing (12); or
increasing the electric current to decrease the thickness of the layer of zinc-aluminum coating (102, 202) on the steel tubing (12).

10. Method of treating a steel tubing with a coating to resist corrosion according to one of the preceding claims, **characterized in that** the first temperature is at least approximately 700°F greater than the second temperature, and preferably the first temperature is at least approximately 1300°F and the second temperature is no greater than approximately 600°F.

11. Method of treating a steel tubing with a coating to resist corrosion according to one of the preceding claims, **characterized in that** the third temperature is at least approximately 800°F.

12. Method of treating a steel tubing with a coating to resist corrosion according to one of the preceding claims, **characterized in that** applying a layer of zinc-aluminum coating on the reheated steel tubing (12) includes passing the steel tubing (12) through a molten bath of zinc-aluminum alloy and maintaining the molten bath of zinc-aluminum alloy at a temperature of at least approximately 800°F.

13. Method of treating a steel tubing with a coating to resist corrosion according to one of the preceding claims, **characterized in that** applying a layer of zinc-aluminum coating on the reheated steel tubing (12) includes passing the steel tubing (12) through a molten bath of zinc-aluminum alloy and maintaining the molten bath of zinc-aluminum alloy at a bath temperature approximately equal to the third temperature.

14. Steel tubing constructed in accordance with a method according to one of the preceding claims.

15. Steel tubing according to claim 14, **characterized in that** the coating of zinc-aluminum alloy (102, 202) has a thickness greater than approximately 10µm, preferably greater than approximately 15µm, more preferably between approximately 18µm and 22µm, more preferably approximately 18µm.
